# EUROPEAN PATENT SPECIFICATION

(11) **EP 3 682 526 B1**
(45) Date of publication and mention of the grant of the patent: **24.05.2023**
(21) Application number: 18855581.7
(22) Date of filing: 12.09.2018
(51) Int. Cl.: H02J 7/02, H02J 7/00, H02J 5/00, H02J 50/12, H02M 7/02, H02K 3/00, H02K 37/00, B60L 3/00, H02P 4/00, H02P 25/22, H02P 27/08

(54) **METHOD AND APPARATUS FOR TRANSMITTING ELECTRIC ENERGY**
VERFAHREN UND VORRICHTUNG ZUR ÜBERTRAGUNG ELEKTRISCHER ENERGIE
PROCÉDÉ ET APPAREIL PERMETTANT DE TRANSMETTRE DE L'ÉNERGIE ÉLECTRIQUE

(30) Priority: 13.09.2017 FI 20175812
(43) Date of publication of application: 22.07.2020
(73) Proprietor: Movekotech Oy, 05800 Hyvinkää (FI)
(72) Inventor: PUROSTO, Tero, 05810 Hyvinkää (FI); SUUR-ASKOLA, Seppo, 12130 Mommila (FI)
(74) Representative: Salomäki, Juha Kari Ensio
(86) International application number: PCT/FI2018/050654
(87) International publication number: WO 2019/053329

(56) References cited:
- EP-A1- 2 451 059
- WO-A1-2014/207267
- WO-A1-2017/041144
- US-A1- 2011 241 591
- US-A1- 2017 047 804
- PATZAK ADRIAN ET AL: "ISCAD - Electric High Performance Drive for Individual Mobility at Extra-Low Voltages", SAE INTERNATIONAL JOURNAL OF ALTERNATIVE POWERTRAINS, vol. 5, no. 1, 5 May 2016 (2016-05-05), pages 148-156, XP055797855, ISSN: 2167-4205, DOI: 10.4271/2016-01-1179 Retrieved from the Internet: URL:http://dx.doi.org/10.4271/2016-01-1179 >
- BAUMGARDT, A. et al.: "48V traction: Innovative drive topology and battery. In: International Conference on Power Electronics, Drives and Energy Systems (PEDES", Trivandrum, India : IEEE, 14 December 2016 (2016-12-14), pages 1-6, XP033090155, ISBN: 978-1-4673-8888-7
- AGLAN, T. S. et al.: "Reduced voltage combined AC motor and drive system for safe electric vehicle", Renewable Energies and Vehicular Technology (REVET), 2012 First International Conference, 26 March 2012 (2012-03-26), pages 199-205, XP032203017, Hammamet, Tunisia DOI: doi:10.1109/REVET.2012.6195271 ISBN: 978-1-4673-1170-0

## Description

The object of the invention is a method as defined in the preamble of claim 1 for transmitting electric energy, and also an apparatus as defined in the preamble of claim 9 for transmitting electric energy.

In the new type of method and new type of apparatus according to the invention for electric energy transmission, electric energy is transmitted from the primary side to the electric energy storages, such as batteries, of the secondary side as extra-low voltage. On the secondary side, extra-low voltage electric energy is conducted along a plurality of independent transfer channels for the electric energy to the stator poles of the drive device, such as of an electric motor. Extra-low voltage refers to direct-current voltage (DC) up to 120 volts and to alternating-current voltage (AC) up to 50 volts. Extra-low voltage is referred to in regulations and standards as ELV (Extra Low Voltage). Since in the solution according to the invention only extra-low voltage occurs on the secondary side of the galvanically isolated primary side and secondary side, and the charging energy coming from the primary side is extra-low voltage, the secondary side of the solution is classified in its entirety as extra-low voltage. Extra-low voltage electrical devices may be constructed, repaired and installed without qualifications for electrical work. The method according to the invention can be very well applied e.g. in electrically-operated vehicles, such as in electric buses and electric cars.

Advances in technology have made electric buses a viable option for replacing conventional diesel busses in the bus traffic of cities and built-up areas. The operating costs of an electric bus are lower than the operating costs of a diesel bus, but at present the initial investments are still higher. The energy costs of electric buses are extremely low. An electric bus consumes on average one kilowatt-hour per kilometer, but its consumption varies depending on, *inter alia,* the vehicle manufacturer, the driving style of the driver, and on traffic conditions and weather conditions. The consumption of an electric bus in cold, snowy and slippery road conditions in winter can increase to an average one-and-a-half kilowatt hours per kilometer. Nevertheless, electric buses promote, *inter alia,* the goals of Finland's Government Programme, such as the use of Finnish, carbon-free, renewable energy in traffic. Finland's Ministry of Transport and Communications has proposed that the proportion of electricity in the bus and distribution traffic of cities must be at least 70% by 2050.

To minimize the mass to be accelerated, the battery pack should be lightweight. In this case, with fully-charged batteries the operating radius of a bus is at most approx. 100 kilometers. A typical approx. half-hour city route can be driven with a charge of less than three minutes at both ends of the route.

So that the battery pack can be kept lightweight, so-called terminus charging is becoming established in Finland as a way of arranging electric bus services, wherein electric buses are charged during the daytime at the terminuses of a bus line, but also during the nighttime at the bus depot.

Charging devices can also be disposed elsewhere along the route. Route-side charging is generally performed using a heavy-duty (≥ 300 kW) current collector charger, which means charging occurring from above the electric bus. Current collector charging is an automatic charging method that can be used both for depot charging and for in-service rapid charging. When using a charging device, the component transmitting electric current to the bus, i.e. the pantograph, can be disposed either in the charging device or in the electric bus itself. Current collector charging technology at its best enables charging of up to 450 kW.

In addition to the current collector charging generally used in urban areas, other methods for the rapid charging of electric buses also exist, such as induction charging, in which automatic charging occurring from underneath the bus is used. Induction charging occurs between a primary winding installed in the ground and a secondary winding installed in the bus, without a contact surface. For proper functioning, induction charging devices require good operating conditions, and even minor detriments such as e.g. tree leaves, sand, rubbish, snow and ice can prevent successful charging. The positioning of an electric bus on an induction charging device also requires an automatic detection system for the electric bus. Induction charging is particularly well suited to buses because they are used on very regular services on a certain route. It reduces the size of the batteries needed and shortens unavoidable standstill times. There are also savings in costs compared to electric buses with larger batteries, regardless of the fact that charging bases are needed at bus stops.

Charging at the bus depot is generally performed using cable charging, in which moderate 20-50 kW charging powers are used in order to minimize costs. In cable charging, the charging cable must be connected by hand to the electric bus. Owing to this, cable charging is best suited to depot charging, when the servicing personnel for electric buses can handle connection of the charging cables.

For the most demanding battery-powered applications, such as the power source for the motors of electric cars and electric buses, battery packs according to modern technology are generally used, the battery packs producing the voltage of approx. 300 - 700 volts required for electric motors. Sufficient voltage is obtained by connecting hundreds of low-voltage, in terms of their nominal voltage (e.g. 3.6 volts), batteries in series. In addition, it is very general that the current to electric motors is further converted into three-phase alternating-voltage current.

Some other problems in existing solutions, in addition to modest operating radius and high price, include ensuring the operating safety of electric vehicles, which is demanding when the operating voltage of the environment exceeds the aforementioned limit for extra-low voltage. To achieve the required level of electrical safety, highvoltage batter circuits must be insulated, i.e. isolated, which increases the thickness, weight and costs of the structures. High charging currents also require large fuse sizes, which in turn incurs higher costs in electrical connections. Higher operating voltages of an apparatus stress the technical components, such as the power components, in which case apparatuses age faster and require more frequent servicing. Also power losses and heat losses are high, directly and indirectly affecting costs through, *inter alia,* the rapid ageing of various components and the need for extra cooling solutions. In addition, all the servicing personnel that operate with apparatus on the secondary side, i.e. on the side on which the drive device and electric energy storages for the drive device are situated, must possess a qualification to perform electrical work, or must work under the supervision of a person with an electrical qualification. This restricts and hampers the servicing procedures for devices, such as e.g. electric buses, incurring extra costs in servicing activities.

Another problem in existing systems is their poor reliability and poor redundancy. If, in some phase of the process of charging, the electric energy storages of a device disruptions occur in the electric energy storages themselves or in using the drive device, there is a high risk that the drive device cannot be utilized before servicing arrives.

One inductive charging system according to prior art is disclosed in patent specification no. WO 2014207267 A1. However, this specification does not present the system being based on the use of extra-low voltage. The problems and risks described above are attached to the use of higher voltage.

Another solution according to prior art is presented in patent specification no. WO 2017041144 A1, which presents a method for transmitting electric energy, the method comprising on the primary side at least one charging energy source and at least one converter, and also on the secondary side at least one drive device with rotor and with stator provided with poles, and more than one electric energy storage for the drive device, as well as at least one transfer channel for electric energy. The system does not, however, appear to be based on the use of extra-low voltage.

Yet another solution according to prior art is presented in publication Patzak, Adrian et al, ISCAD - Electric High Performance Drive for Individual Mobility at Extra-Low Voltages, SAE International journal of alternative powertrains, 2016, Vol.5, p.148-156. The publication presents an extra-low voltage drive method, in which extra-low voltage electric energy is conducted to the stator poles in a closed circuit from the electric energy storage for the drive device, and in which extra-low voltage electric energy is conducted from each electric energy storage for the drive device in a closed circuit via its own independent current control component and its own independent electric energy transmission channel to the drive device, to at least one stator pole.

None of the cited documents show the features of the pending invention, in which more than one charging element using extra-low voltage is arranged on the primary side, and the same number of electric energy receiving elements, electric energy storages for the drive device, current control components and outgoing electric energy transmission channels, all of which using extra-low voltage, are arranged on the secondary side of the apparatus as there are charging elements arranged on the primary side of the apparatus.

The aim of the present invention is to eliminate the aforementioned drawbacks and to provide a safe, effective and economic method and apparatus for transmitting electric energy. The method according to the invention for transmitting electric energy is characterized by what is disclosed in the characterization part of claim 1, and the apparatus according to the invention for transmitting electric energy is characterized by what is disclosed in the characterization part of claim 9. Other embodiments of the invention are characterized by what is disclosed in the other claims.

In the method according to the invention for transmitting electric energy, the primary side of the method comprises at least one charging energy source and at least one transformer, and also on the secondary side more than one electric energy storage for the drive device, at least one transfer channel for electric energy and at least one drive device. In the method more than one charging element using extra-low voltage is arranged on the primary side. The same number of electric energy receiving elements, electric energy storages for the drive device, current control components and outgoing electric energy transmission channels, all of which using extra-low voltage, are arranged on the secondary side of the apparatus as there are charging elements arranged in the apparatus. From each electric energy storage for the drive device extra-low voltage electric energy is conducted in a closed circuit via its own independent current control component and its own independent electric energy transmission channel to the drive device, to at least one stator pole.

One substantial advantage, among others, of the method and apparatus according to the invention, hereinafter referred to more briefly as the solution, is that the necessary extra-low voltage electric energy is channeled to the drive device, to a number of stator poles, in which case the whole of the operating environment of the drive device, i.e. on the secondary side, functions purely in the extra-low voltage range. When the voltages are finally summed in the drive device, the same electric power is obtained as is used e.g. in electric buses operating with normal high voltages of approx. 700 volts. Another advantage is also that by means of the solution direct-voltage current supply to an electric motor is arrangeable in the same way as if the current were three-phase alternating-voltage current. The advantages of operating with extra-low voltage include a clear improvement in the electrical safety of the operating environment. Low direct-voltage current of extra-low voltage is not life-threatening to people. According to current safety regulations, electrical qualifications are not required of persons working in an extra-low voltage environment, which facilitates e.g. using personnel in installation and servicing of the drive device. Using extra-low voltage enables lighter insulations and cooling solutions and also simpler supervisions and circuits. Furthermore, an extra-low voltage environment does not stress the components of the operating environment in the same way as higher voltages, in which case the failure rate of the system improves and servicing intervals are longer. All the aforementioned issues significantly reduce the acquisition and operating costs of the apparatus.

Another advantage is the redundancy of the operating environment on both the primary side and the secondary side. The primary side has more than one unit of all the components needed for charging, and charging would continue without interruption even if one of the components were to fail. On the secondary side, the transmission of electric energy to the drive device is arranged by means of a number of independent, extra-low voltage, electric energy transmission channels, and there are the same number of electric energy storages, i.e. batteries, for the drive device as there are independent electric energy transmission channels in use. When there is a disruption of current supply in an individual channel. the operation of the drive device will continue because the other channels supply current to the drive device from their own independent batteries normally.

Another advantage is the improved availability of batteryoperated devices, such as e.g. wireless charging, and longer battery duration. With the method and apparatus according to the invention e.g. charging energy storages, such as batteries, on the primary side can be continuously charged while also little by little saving electricity costs, because the fuse size of the charging current source does not need to be large. When a drive device, such as an electric bus, arrives at the charging station, a rapid charge of the batteries of the electric bus from the charging energy storages is performed with a large amount of current but with little voltage, in which case the charging time can be very short, even just a few minutes, and the electric bus has new electric energy to continue driving again until the next charging interval.

In the following, the invention will be described in greater detail by the aid of some embodiments and by referring to the attached simplified drawings, wherein
- Fig. 1: presents simplified diagram of one embodiment according to the invention,
- Fig. 2: presents a simplified diagram of a second embodiment according to the invention,
- Fig. 3: presents one simplified apparatus, an electric bus, according to the invention in which an arrangement according to Fig. 1 is applied.

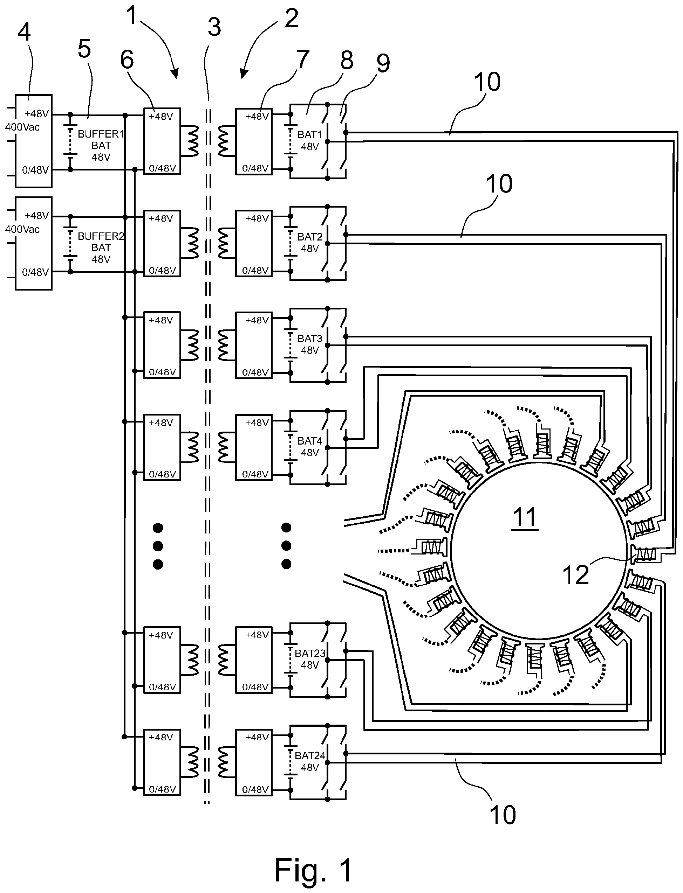

Fig. 1 presents a simplified diagram of one embodiment according to the invention for transmitting electric energy to a drive device 11 and for charging electric energy into the electric energy storages 8 of the drive device. In the arrangement, the environment is divided into two sides: the primary side 1, i.e. the electric energy charging side, and the secondary side 2, i.e. the electric energy receiving side. The primary side 1 and secondary side 2 are galvanically isolated 3 from each other. In practice, this means that the primary side 1 and the secondary side 2 are not physically in contact with each other, but instead the transmission of electric energy from the primary side 1 to the secondary side 2 is implemented completely wirelessly through electromagnetic induction.

Three-phase alternating-voltage current, the voltage level of which is 400 volts, functions as the source of the charging energy. In the embodiment there are two charging energy sources, separate from each other, functioning behind their own fuses. The current is conducted to converters 4, which transform the current into direct-voltage current and reduce the voltage level to 48 volts. With this 48-volt direct-voltage current, two 48-volt charging energy storages 5, such as batteries, are charged. Charging is performed continuously with a small amount of current, in which case small fuse sizes can be used, which in turn has a reducing effect on electricity procurement costs. The charging energy storages 5 are preferably highcapacity batteries, in which case they can quickly deliver current to the secondary side 2 via a number of charging elements 6. Since there are two, or even more, charging energy sources and charging energy storages 5, redundancy is achieved on the primary side 1, i.e. if some component on the primary side 1 fails, the primary side 1 is nevertheless able to continue the supply of electric energy to the secondary side 2.

From the charging energy storages 5 electric energy is transmitted from the primary side 1 by means of the charging elements 6 to the secondary side 2. In the embodiment according to the figure, there are 24 units of charging elements 6. At its simplest, a charging element 6 is a coil component, i.e. a winding, that creates an electromagnetic field around itself. On the secondary side 2 the electric energy receiving element 7, which is a coil component corresponding to the charging element 6, receives the charging energy. Transmission of electric energy from the primary side 1 to the secondary side 2 takes place as induction charging, which is based on electromagnetic induction, and the charging method is completely wireless. It is advantageous to implement wireless power transmission as resonance-based resonance-induction, which improves efficiency in the transmission of electric energy. Each charging element 6 of the primary side 1 has one electric energy receiving element 7 on the secondary side 2.

The energy receiving element 7 transmits the 48-volt electric energy it receives to the electric energy storage 8, such as a battery, of the drive device. Each electric energy receiving means 7 has its own electric energy storage 8 for the drive device, i.e. there are as many electric energy storages 8 for the drive device as there are electric energy receiving means 7. In this embodiment, therefore, there are 24 battery units for the drive device 11.

From the electric energy storage 8 for the drive device the electric energy is conducted to a current control component 9, such as e.g. to an H bridge component, by means of which the current supply and current polarity, i.e. travel direction, to the drive device 11 can be controlled. Each electric energy storage 8 for the drive device has its own individual current control component 9. The current control components are controlled centrally by means of a current control system, which enables optimal electric energy supply and control of the polarity of current to the drive device 11. From each current control component 9 the electric energy is transmitted along electric energy transmission channels 10 to the drive device 11.

The drive device 11 is an electric motor 11 that has 24 units of stator poles 12. A stator pole 12 is a coil component, i.e. a winding, in the stator, to which component electric energy is conducted by means of two conductors. To each stator pole 12 is connected its own individual electric energy storage 8 for the drive device, its own individual current control component 9 and its own individual electric energy transmission channel 10, along which 48-volt electric energy is supplied in a closed circuit to the stator pole 12. By controlling the current control components 9 suitably to supply extra-low voltage electric energy to the stator poles 12, an electric motor can be made to function just like e.g. a normal three-phase electric motor using alternating-voltage current. With the current control components 9 the polarity of the current can be changed, in which case the electric motor 11 rotates in the opposite direction. Each stator pole 12 of the electric motor 11 has its own independent 48-volt circuit, and in none of the system components does the operating voltage exceed a voltage of 48 volts. Although the electric energy voltages in the system do not exceed 48 volts, when they are summed together for the drive device they correspond in power terms to higher-voltage operating environments.

Since the primary side 1 is galvanically isolated 3 from the secondary side 2, and the operating voltages on the secondary side 2 are kept in separate electric energy transmission channels 10, in which case their voltage levels do not rise to higher than 48 volts, the secondary side 2 can be classified as a completely extra-low voltage environment. Extra-low voltage refers to direct-current voltage (DC) up to 120 volts and to alternating-current voltage (AC) up to 50 volts. Extra-low voltage is referred to in regulations and standards as ELV (Extra Low Voltage). The operating environment in question classified as extra-low voltage is electrically safe and extremely costefficient. Extra-low voltage electrical devices may be constructed, repaired and installed without qualifications for electrical work.

In the embodiments presented above there were 24 units of charging elements 6, of electric energy receiving elements 7, of electric energy storages 8 for the drive device, of current control components 9, of electric energy transmission channels 10, and of stator poles 12 of the drive device 11. The number of these components can very well vary, depending on e.g. the intended use of the drive device or on the level of extra-low voltage to be used. The numbers can range between e.g. 8 - 36 units.

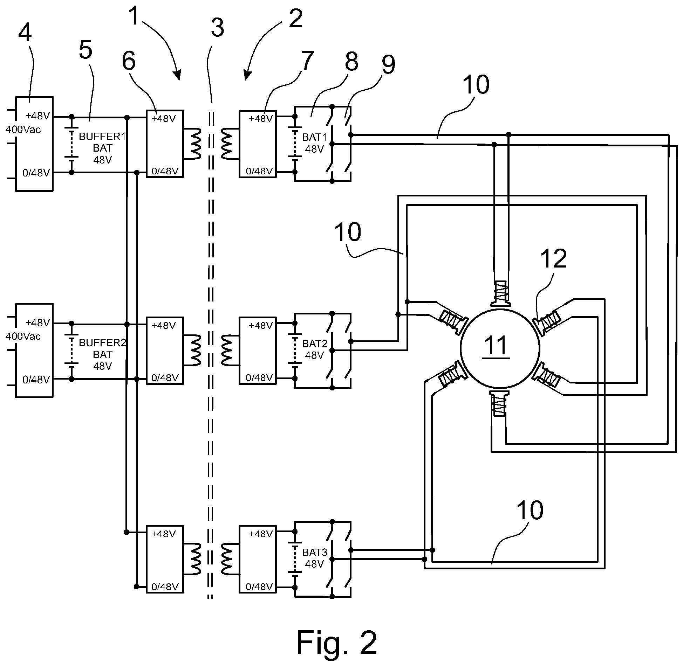

Fig. 2 presents a simplified diagram of a second embodiment according to the invention. The solution of the primary side 1 corresponds to what is presented in Fig.1, but there are only three units of transmission elements 6. Correspondingly, on the secondary side there are three electric energy receiving elements 7, three electric energy storages 8 for the drive device, three current control components 9, and three outgoing electric energy transmission channels 10 for the drive device 11. For the sake of clarity, there are only three units of each component, but in the actual embodiments there can also be many more of these components. In the drive device 11, such as in an electric motor, there are correspondingly double the number of stator poles 12, i.e. in this embodiment six units. From one electric energy storage 8 for the drive device, electric energy is conducted via an electric energy transmission channel 10 to two stator poles 12, which are disposed on opposite sides of the rim of the rotor of the electric motor 11, and the current in the opposite stator poles 12 is conducted to travel in different directions, i.e. with different polarity.

Since in the embodiments presented above there are on the secondary side 2 a number of electric energy storages 8 for the drive device, of current control components 9 and of electric energy transmission channels 10, redundancy is achieved on the secondary side 2, i.e. if some component on the secondary side 2 possibly fails, the secondary side 2 is nevertheless able to continue the supply of electric energy to the electric motor 11, and the electric motor 11 remains operational.

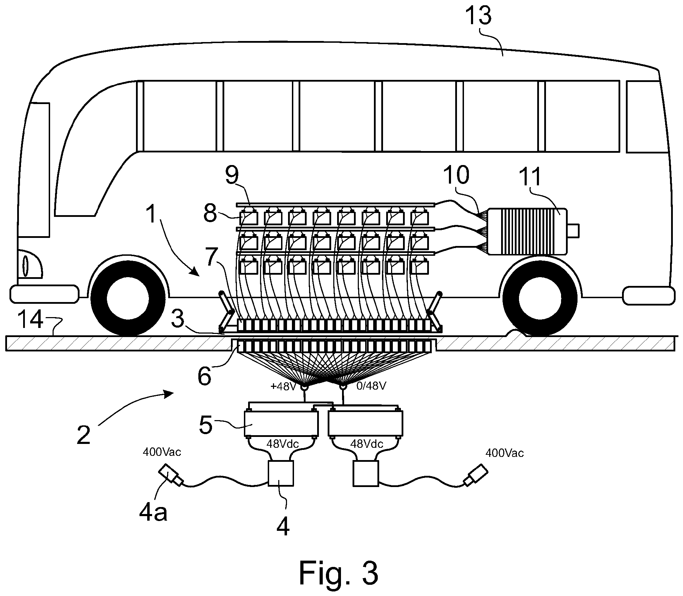

Fig. 3 presents a simplified apparatus according to the invention, an electric bus 13, in which an arrangement according to Fig. 1 is applied.

The primary side 1, i.e. the charging point of the electric bus 13, is arranged below a base 14, such as below the road. At the charging station are two separate three-phase charging current sources 4a, from which extra-low voltage electric energy is supplied continuously via converters 4 to charging energy storages 5, such as to batteries 5. The batteries 5 are connected in parallel to each other to form battery pairs, in which case their nominal voltage remains the same, i.e. 48 volts, but their capacity is their cumulative capacity. When the bus 13 arrives at the charging location, the charging side is activated and current is conducted from the batteries 5 to the electric energy charging elements 6. The electric energy receiving elements 7 are lowered from the underframe of the bus 13 to near the base 14 and to the point of the charging elements 6. Normally there are solutions at the charging location that facilitate positioning of the bus 13. The charging elements 6 supply electric energy from the charging energy storages 5 to the electric energy receiving means 7, with resonance-induction, wirelessly, and with a large amount of current, said receiving means transmitting electric energy to the electric energy storages 8, i.e. to the batteries 8, of the drive device. Charging of the batteries takes place as a rapid charge that typically lasts only a few minutes, depending on how far the electric bus 13 must drive before the next charging session. After charging of the batteries 8 has ended, the electric energy receiving means 7 are raised back inside the underframe of the bus 13 and the bus can continue its journey.

In an independent closed circuit, extra-low voltage electric energy is conducted from an individual battery 8 in an electric energy transmission channel 10 to one stator pole 12 of the electric motor 11. From all the 24 batteries of the electric bus 13, extra-low voltage electric energy is conducted in independent closed circuits dedicated to the stator poles 12 of the electric motor 11. In each closed circuit is also a current control component 9, and these current control components 9 are controlled centrally, optimizing the desired and advantageous operation of the electric motor.

It is obvious to the person skilled in the art that different embodiments of the invention are not limited to the example described above, but that they may be varied within the scope of the claims presented below. What is essential in the invention is that only extra-low voltages are used on the secondary side of the arrangement and that the current supply to the drive device is channeled with a plurality of separate extra-low voltage circuits. Thus, for example, the extra-low voltages presented can differ from the 48 volts used in the embodiments, so long as the voltage does not exceed the internationally specified limit value for extra-low voltage.

It is also obvious to the person skilled in the art that in the method and apparatus according to the invention, the numbers of components, such as charging elements, batteries and current control components, can be different to what is presented in the embodiments.

It is also obvious to the person skilled in the art that in the method and apparatus according to the invention, the voltage level of the charging energy source can be different to what is presented in the embodiments. The nominal voltage of the charging energy source can be e.g. 230 VAC.

It is further obvious to the person skilled in the art that in the method and apparatus according to the invention, instead of batteries, also other electric energy storages suited to the purpose, e.g. capacitors, preferably supercapacitors, can be used as a charging energy storage or as an electric energy storage for the drive device.

## Claims

1. Method for transmitting electric energy, the method comprising on the primary side (1) at least one charging energy source and at least one converter (4), and also on the secondary side (2) at least one drive device (11) with rotor and with stator provided with poles (12), and more than one electric energy receiving element (7), electric energy storage (8) for the drive device (11) and current control component (9), as well as at least one outgoing electric energy transfer channel (10) for electric energy, **characterized in that** in the method more than one charging element (6) using extra-low voltage is arranged on the primary side (1), and **in that** the same number of electric energy receiving elements (7), electric energy storages (8), current control components (9) and outgoing electric energy transmission channels (10), all of which using extra-low voltage, are arranged on the secondary side (2) of the apparatus as there are charging elements (6) arranged on the primary side (1), and **in that** extra-low voltage electric energy is conducted to the stator poles (12) in a closed circuit from the electric energy storage (8) for the drive device, and **in that** from each electric energy storage (8) for the drive device extra-low voltage electric energy is conducted in a closed circuit via its own independent current control component (9) and its own independent electric energy transmission channel (10) to the drive device (11), to at least one stator pole (12).

2. Method according to claim 1 for transmitting electric energy, **characterized in that** the extra-low voltage charging energy produced by the converter (4) is stored in at least one charging energy storage (5) of the primary side (1) .

3. Method according to claim 1 or 2 for transmitting electric energy, **characterized in that** in the method only extra-low voltage electric energy is used on the secondary side (2), and **in that** only extra-low voltage electric energy is used in the charging energy storages (5) of the primary side (1) as well as in the charging elements (6).

4. Method according to claim 1, 2 or 3 for transmitting electric energy, **characterized in that** the primary side (1) charging electric energy and the secondary side (2) receiving electric energy are galvanically (3) isolated from each other.

5. Method according to any of the preceding claims for transmitting electric energy, **characterized in that** electric energy is charged from the primary side (1) to the secondary side (2) wirelessly as induction charging.

6. Method according to any of the preceding claims for transmitting electric energy, **characterized in that** the amount and polarity of the electric energy leaving an electric energy storage (8) of the drive device to the drive device (11) is adjusted by means of the current control component (9).

7. Method according to any of the preceding claims for transmitting electric energy, **characterized in that** from each electric energy storage (8) of the drive device its own independent electric energy transmission channel (10) is conducted to one stator pole (12) of the drive device (11) .

8. Method according to any of the preceding claims 1-6 for transmitting electric energy, **characterized in that** from each electric energy storage (8) of the drive device electric energy is conducted via electric energy transmission channels (10) to two opposite stator poles (12) of the drive device (11).

9. Apparatus for transmitting electric energy, the apparatus comprising on the primary side (1) at least one charging energy source and at least one converter (4), and on the secondary side (2) a drive device (11) provided with a rotor and a stator provided with poles (12), more than one electric energy receiving element (7), electric energy storage (8) for the drive device (11) and current control component (9), and at least one outgoing electric energy transmission channel (10), **characterized in that** the primary side (1) of the apparatus comprises more than one charging element (6) using extra-low voltage, and **in that** the secondary side (2) comprises the same number of electric energy receiving elements (7), electric energy storages (8) in connection with current control components (9) and outgoing electric energy transmission channels (10), all of which using extra-low voltage, as there are charging elements (6) in the apparatus, and **in that** the drive device (11) comprises at least the number of extra-low voltage receiving stator poles (12) according to the number of charging elements (6), and that each electric energy receiving element (7) is connected to its own electric energy storage (8), and that the secondary side (2) comprises a closed circuit between each electric energy storage (8) and at least one stator pole (12).

10. Apparatus according to claim 9 for transmitting electric energy, **characterized in that** the primary side (1) of the apparatus comprises more than one charging energy source, converter (4) and charging energy storage (5).

11. Apparatus according to claim 9 or 10 for transmitting electric energy, **characterized in that** the apparatus comprises galvanic isolation (3) of the primary side (1) and the secondary side (2).

12. Apparatus according to claim 9, 10 or 11 for transmitting electric energy, **characterized in that** there are 8 - 36 units of charging elements (6) in the apparatus.

13. Apparatus according to any of the preceding claims 9-12 for transmitting electric energy, **characterized in that** the primary side (1) of the apparatus preferably comprises 24 units of charging elements (6).

14. Apparatus according to any of the preceding claims 9-13 for transmitting electric energy, **characterized in that** the drive device (11) comprises the same number of stator poles (12) as there are charging elements (6) on the primary side (1) .

15. Apparatus according to any of the preceding claims 10-13 for transmitting electric energy, **characterized in that** the drive device (11) comprises twice the number of stator poles (12) as there are charging elements (6) on the primary side (1), and **in that** from one electric energy storage (8) for the drive device a circuit is connected by means of an electric energy transmission channel (10) to two opposite stator poles (12) of the drive device (11), and **in that** current in the opposite stator poles (12) is conducted to travel in different directions.

## Patentansprüche

1. Verfahren zum Übertragen elektrischer Energie, das Verfahren umfassend an der Primärseite (1) mindestens eine Ladeenergiequelle und mindestens einen Wandler (4) und ebenso an der Sekundärseite (2) mindestens eine Antriebsvorrichtung (11) mit Rotor und mit Stator, der mit Polen (12) versehen ist, und mehr als ein Empfangselement (7) elektrischer Energie, einen Speicher (8) elektrischer Energie für die Antriebsvorrichtung (11) und eine Stromsteuerkomponente (9) sowie mindestens einen ausgehenden Transferkanal (10) elektrischer Energie für elektrische Energie, **dadurch gekennzeichnet, dass** in dem Verfahren mehr als ein Ladeelement (6), das Kleinspannung verwendet, an der Primärseite (1) angeordnet ist und **dass** die gleiche Anzahl von Empfangselementen (7) elektrischer Energie, Speichern (8) elektrischer Energie, Stromsteuerkomponenten (9) und ausgehenden Übertragungskanälen (10) elektrischer Energie, von denen alle Kleinspannung verwenden, an der Sekundärseite (2) der Einrichtung angeordnet sind wie Ladeelemente (6) an der Primärseite (1) angeordnet sind und **dass** elektrische Energie mit Kleinspannung in einem geschlossenen Schaltkreis von dem Speicher (8) elektrischer Energie für die Antriebsvorrichtung an die Statorpole (12) geleitet wird und **dass** von jedem Speicher (8) elektrischer Energie für die Antriebsvorrichtung elektrische Energie mit Kleinspannung in einem geschlossenen Schaltkreis über seine eigene unabhängige Stromsteuerkomponenten (9) und seinen eigenen unabhängigen Übertragungskanal (10) elektrischer Energie an die Antriebsvorrichtung (11), an mindestens einen Statorpol (12) geleitet wird.

2. Verfahren nach Anspruch 1 zum Übertragen elektrischer Energie, **dadurch gekennzeichnet, dass** die Ladeenergie mit Kleinspannung, die durch den Wandler (4) erzeugt wird, in mindestens einem Ladeenergiespeicher (5) der Primärseite (1) gespeichert wird.

3. Verfahren nach Anspruch 1 oder 2 zum Übertragen elektrischer Energie, **dadurch gekennzeichnet, dass** in dem Verfahren nur elektrische Energie mit Kleinspannung an der Sekundärseite (2) verwendet wird und **dass** nur elektrische Energie mit Kleinspannung in den Ladeenergiespeichern (5) der Primärseite (1) sowie in den Ladeelementen (6) verwendet wird.

4. Verfahren nach Anspruch 1, 2 oder 3 zum Übertragen elektrischer Energie, **dadurch gekennzeichnet, dass** die Primärseite (1), die elektrische Energie lädt, und die Sekundärseite (2), die elektrische Energie empfängt, voneinander galvanisch (3) getrennt sind.

5. Verfahren nach einem der vorstehenden Ansprüche zum Übertragen elektrischer Energie, **dadurch gekennzeichnet, dass** elektrische Energie von der Primärseite (1) an die Sekundärseite (2) als induktives Laden drahtlos geladen wird.

6. Verfahren nach einem der vorstehenden Ansprüche zum Übertragen elektrischer Energie, **dadurch gekennzeichnet, dass** die Menge und Polarität der elektrischen Energie, die einen Speicher (8) elektrischer Energie der Antriebsvorrichtung an die Antriebsvorrichtung (11) verlässt, mittels der Stromsteuerkomponente (9) eingestellt wird.

7. Verfahren nach einem der vorstehenden Ansprüche zum Übertragen elektrischer Energie, **dadurch gekennzeichnet, dass** von jedem Speicher (8) elektrischer Energie der Antriebsvorrichtung sein eigener unabhängiger Übertragungskanal (10) elektrischer Energie an einen Statorpol (12) der Antriebsvorrichtung (11) geleitet wird.

8. Verfahren nach einem der vorstehenden Ansprüche 1 bis 6 zum Übertragen elektrischer Energie, **dadurch gekennzeichnet, dass** von jedem Speicher (8) elektrischer Energie der Antriebsvorrichtung elektrische Energie über Übertragungskanäle (10) elektrischer Energie an zwei gegenüberliegende Statorpole (12) der Antriebsvorrichtung (11) geleitet wird.

9. Einrichtung zum Übertragen elektrischer Energie, die Einrichtung umfassend an der Primärseite (1) mindestens eine Ladeenergiequelle und mindestens einen Wandler (4) und an der Sekundärseite (2) eine Antriebsvorrichtung (11), die mit einem Rotor versehen ist, und einen Stator, der mit Polen (12) versehen ist, mehr als ein Empfangselement (7) elektrischer Energie, einen Speicher (8) elektrischer Energie für die Antriebsvorrichtung (11) und eine Stromsteuerkomponente (9) und mindestens einen ausgehenden Übertragungskanal (10) elektrischer Energie, **dadurch gekennzeichnet, dass** die Primärseite (1) der Einrichtung mehr als ein Ladeelement (6), das Kleinspannung verwendet, umfasst und **dass** die Sekundärseite (2) die gleiche Anzahl von Empfangselementen (7) elektrischer Energie, Speichern (8) elektrischer Energie, die in Verbindung mit Stromsteuerkomponenten (9) stehen, und ausgehenden Übertragungskanälen (10) elektrischer Energie, von denen alle Kleinspannung verwenden, wie sich Ladeelemente (6) in der Einrichtung befinden, umfasst und **dass** die Antriebsvorrichtung (11) mindestens die Anzahl von Kleinspannung empfangenden Statorpolen (12) gemäß der Anzahl von Ladeelementen (6) umfasst und **dass** jedes Empfangselement (7) elektrischer Energie mit seinem eigenen Speicher (8) elektrischer Energie verbunden ist und **dass** die Sekundärseite (2) einen geschlossenen Schaltkreis zwischen jedem Speicher (8) elektrischer Energie und mindestens einem Statorpol (12) umfasst.

10. Einrichtung nach Anspruch 9 zum Übertragen elektrischer Energie, **dadurch gekennzeichnet, dass** die Primärseite (1) der Einrichtung mehr als eine Ladeenergiequelle, einen Wandler (4) und einen Ladeenergiespeicher (5) umfasst.

11. Einrichtung nach Anspruch 9 oder 10 zum Übertragen elektrischer Energie, **dadurch gekennzeichnet, dass** die Einrichtung eine galvanische Trennung (3) der Primärseite (1) und der Sekundärseite (2) umfasst.

12. Einrichtung nach Anspruch 9, 10 oder 11 zum Übertragen elektrischer Energie, **dadurch gekennzeichnet, dass** sich 8-36 Einheiten von Ladeelementen (6) in der Einrichtung befinden.

13. Einrichtung nach einem der vorstehenden Ansprüche 9 bis 12 zum Übertragen elektrischer Energie, **dadurch gekennzeichnet, dass** die Primärseite (1) der Einrichtung vorzugsweise 24 Einheiten von Ladeelementen (6) umfasst.

14. Einrichtung nach einem der vorstehenden Ansprüche 9 bis 13 zum Übertragen elektrischer Energie, **dadurch gekennzeichnet, dass** die Antriebsvorrichtung (11) die gleiche Anzahl von Statorpolen (12), wie sich Ladeelemente (6) an der Primärseite (1) befinden, umfasst.

15. Einrichtung nach einem der vorstehenden Ansprüche 10 bis 13 zum Übertragen elektrischer Energie, **dadurch gekennzeichnet, dass** die Antriebsvorrichtung (11) die doppelte Anzahl von Statorpolen (12), wie sich Ladeelemente (6) an der Primärseite (1) befinden, umfasst und **dass** von einem Speicher (8) elektrischer Energie für die Antriebsvorrichtung ein Schaltkreis mittels eines Übertragungskanals (10) elektrischer Energie mit zwei gegenüberliegenden Statorpolen (12) der Antriebsvorrichtung (11) verbunden ist und **dass** Strom in den gegenüberliegenden Statorpolen (12) geleitet wird, um sich in verschiedenen Richtungen zu bewegen.

## Revendications

1. Procédé de transmission d'énergie électrique, le procédé comprenant sur le côté primaire (1) au moins une source d'énergie de charge et au moins un convertisseur (4), ainsi que sur le côté secondaire (2) au moins un dispositif d'entraînement (11) avec un rotor et avec un stator pourvu de pôles (12), et plus d'un élément récepteur d'énergie électrique (7), un accumulateur d'énergie électrique (8) pour le dispositif d'entraînement (11) et un composant de commande de courant (9), ainsi qu'au moins un canal de transfert d'énergie électrique sortant (10) pour l'énergie électrique, **caractérisé en ce que,** dans le procédé, plus d'un élément de charge (6) utilisant une tension très basse est disposé sur le côté primaire (1), et **en ce qu'**autant d'éléments récepteurs d'énergie électrique (7), d'accumulateurs d'énergie électrique (8), de composants de commande de courant (9) et de canaux de transmission d'énergie électrique sortants (10), utilisant tous une tension très basse, sont disposés sur le côté secondaire (2) de l'appareil qu'il y a d'éléments de charge (6) disposés sur le côté primaire (1), et **en ce que** l'énergie électrique à tension très basse est conduite vers les pôles de stator (12) dans un circuit fermé à partir de l'accumulateur d'énergie électrique (8) pour le dispositif d'entraînement, et **en ce que**, à partir de chaque accumulateur d'énergie électrique (8), de l'énergie électrique à tension très basse est conduite en circuit fermé par l'intermédiaire de son propre composant de commande de courant indépendant (9) et de son propre canal de transmission d'énergie électrique indépendant (10) vers le dispositif d'entraînement (11), vers au moins un pôle de stator (12).

2. Procédé selon la revendication 1 pour la transmission d'énergie électrique, **caractérisé en ce que** l'énergie de charge à tension très basse produite par le convertisseur (4) est stockée dans au moins un accumulateur d'énergie de charge (5) du côté primaire (1).

3. Procédé selon la revendication 1 ou 2 pour la transmission d'énergie électrique, **caractérisé en ce que,** dans le procédé, seule l'énergie électrique à tension très basse est utilisée sur le côté secondaire (2), et **en ce que** seule l'énergie électrique à tension très basse est utilisée dans les accumulateurs d'énergie de charge (5) du côté primaire (1) ainsi que dans les éléments de charge (6).

4. Procédé selon la revendication 1, 2 ou 3 pour la transmission d'énergie électrique, **caractérisé en ce que** le côté primaire (1) qui charge l'énergie électrique et le côté secondaire (2) qui reçoit l'énergie électrique sont galvaniquement (3) isolés l'un de l'autre.

5. Procédé selon l'une quelconque des revendications précédentes pour la transmission d'énergie électrique, **caractérisé en ce que** l'énergie électrique est chargée du côté primaire (1) vers le côté secondaire (2) sans fil en tant que charge d'induction.

6. Procédé selon l'une quelconque des revendications précédentes pour la transmission d'énergie électrique, **caractérisé en ce que** la quantité et la polarité de l'énergie électrique sortant d'un accumulateur d'énergie électrique (8) du dispositif d'entraînement au dispositif d'entraînement (11) sont ajustées au moyen du composant de commande de courant (9).

7. Procédé selon l'une quelconque des revendications précédentes pour la transmission d'énergie électrique, **caractérisé en ce que,** à partir de chaque accumulateur d'énergie électrique (8) du dispositif d'entraînement, son propre canal de transmission d'énergie électrique indépendant (10) est conduit jusqu'à un pôle de stator (12) du dispositif d'entraînement (11).

8. Procédé selon l'une quelconque des revendications précédentes 1 à 6 pour la transmission de l'énergie électrique, **caractérisé en ce que,** à partir de chaque accumulateur d'énergie électrique (8) du dispositif d'entraînement, de l'énergie électrique est conduite par l'intermédiaire de canaux de transmission d'énergie électrique (10) vers deux pôles de stator opposés (12) du dispositif d'entraînement (11).

9. Appareil pour la transmission d'énergie électrique, l'appareil comprenant sur le côté primaire (1) au moins une source d'énergie de charge et au moins un convertisseur (4), et sur le côté secondaire (2) un dispositif d'entraînement (11) pourvu d'un rotor et d'un stator pourvu de pôles (12), plus d'un élément récepteur d'énergie électrique (7), un accumulateur d'énergie électrique (8) pour le dispositif d'entraînement (11) et un composant de commande de courant (9), et au moins un canal de transmission d'énergie électrique sortant (10), **caractérisé en ce que** le côté primaire (1) de l'appareil comprend plus d'un élément de charge (6) utilisant une tension très basse, et **en ce que** le côté secondaire (2) comprend le même nombre d'éléments récepteurs d'énergie électrique (7), d'accumulateurs d'énergie électrique (8) en connexion avec des composants de commande de courant (9) et des canaux de transmission d'énergie électrique sortants (10), utilisant tous une tension très basse, qu'il y a d'éléments de charge (6) dans l'appareil, et **en ce que** le dispositif d'entraînement (11) comprend au moins le nombre de pôles de stator de réception à tension très basse (12) en fonction du nombre d'éléments de charge (6), et que chaque élément de réception d'énergie électrique (7) est connecté à son propre stockage d'énergie électrique (8) et que le côté secondaire (2) comprend un circuit fermé entre chaque stockage d'énergie électrique (8) et au moins un pôle de stator (12).

10. Appareil selon la revendication 9 pour la transmission d'énergie électrique, **caractérisé en ce que** le côté primaire (1) de l'appareil comprend plus d'une source d'énergie de charge, un convertisseur (4) et un accumulateur d'énergie de charge (5).

11. Appareil selon la revendication 9 ou 10 pour la transmission d'énergie électrique, **caractérisé en ce que** l'appareil comprend une isolation galvanique (3) du côté primaire (1) et du côté secondaire (2).

12. Appareil selon la revendication 9, 10 ou 11 pour la transmission d'énergie électrique, **caractérisé en ce qu'il** y a 8 à 36 unités d'éléments de charge (6) dans l'appareil.

13. Appareil selon l'une quelconque des revendications précédentes 9 à 12 pour la transmission d'énergie électrique, **caractérisé en ce que** la face primaire (1) de l'appareil comprend de préférence 24 unités d'éléments de charge (6).

14. Appareil selon l'une quelconque des revendications précédentes 9 à 13 pour la transmission d'énergie électrique, **caractérisé en ce que** le dispositif d'entraînement (11) comprend autant de pôles de stator (12) qu'il y a d'éléments de charge (6) sur le côté primaire (1).

15. Appareil selon l'une quelconque des revendications précédentes 10 à 13 pour la transmission d'énergie électrique, **caractérisé en ce que** le dispositif d'entraînement (11) comprend deux fois plus le nombre de pôles de stator (12) qu'il y a d'éléments de charge (6) sur le côté primaire (1), et **en ce qu'**à partir d'un accumulateur d'énergie électrique(8) pour le dispositif d'entraînement, un circuit est connecté au moyen d'un canal de transmission d'énergie électrique (10) à deux pôles de stator opposés (12) du dispositif d'entraînement (11), et **en ce que** le courant dans les pôles de stator opposés (12) est conduit pour se déplacer dans des directions différentes.
